# EUROPEAN PATENT SPECIFICATION

(11) **EP 3 997 938 B1**
(45) Date of publication and mention of the grant of the patent: **18.03.2026**
(21) Application number: 20836850.6
(22) Date of filing: 22.05.2020
(51) Int. Cl.: H04W 72/04, H04W 74/08, H04B 1/7143, H04L 5/14, H04W 74/0833, H04L 5/00, H04L 27/26

(54) **METHODS, TERMINAL DEVICE AND BASE STATION FOR RANDOM ACCESS PROCEDURE**
VERFAHREN, ENDGERÄT UND BASISSTATION FÜR ZUFALLSZUGRIFFSVERFAHREN
PROCÉDÉS, DISPOSITIF TERMINAL ET STATION DE BASE POUR PROCÉDURE D'ACCÈS ALÉATOIRE

(30) Priority: 08.07.2019 WO PCT/CN2019/095131
(43) Date of publication of application: 18.05.2022
(73) Proprietor: Telefonaktiebolaget LM Ericsson (publ), 164 83 Stockholm (SE)
(72) Inventor: BLANKENSHIP, Yufei, Circle Kildeer, IL 60047 (US); ZHANG, Jianwei, 170 62 Solna (SE); HARRISON, Robert Mark, Grapevine, TX 76051 (US); LIN, Zhipeng, Nanjing, Jiangsu 211100 (CN)
(74) Representative: Ericsson
(86) International application number: PCT/CN2020/091844
(87) International publication number: WO 2021/004172

(56) References cited:
- EP-A1- 3 462 795
- EP-A1- 3 462 795
- WO-A1-2018/199696
- WO-A1-2019/049283
- US-A1- 2018 310 341
- US-A1- 2019 116 588
- NEC: "R1-1717153, Frequency hopping for NR UL PUSCH", 3GPP TSG-RAN WG1 MEETING #90BIS, 20 September 2017 (2017-09-20), pages 1 - 3, XP051352205, DOI: 20200706161041X

## Description

### Technical Field

Embodiments of the disclosure generally relate to wireless communication, and, more particularly, to methods, a terminal device and a base station for random access procedure.

### Background

This section introduces aspects that may facilitate better understanding of the present disclosure. Accordingly, the statements of this section are to be read in this light and are not to be understood as admissions about what is in the prior art or what is not in the prior art.

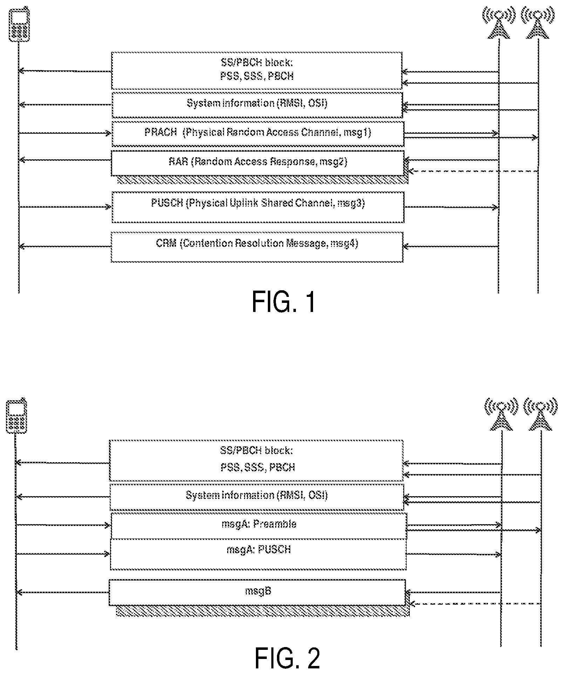

In new radio (NR) system, a four-step approach as shown in FIG. 1 may be used for random access procedure. In this approach, the user equipment (UE) detects a synchronization signal (SS) and decodes the broadcasted system information (which may be distributed over multiple physical channels, e.g. physical broadcast channel (PBCH) and physical downlink shared channel (PDSCH)) to acquire random access transmission parameters, followed by transmitting a physical random access channel (PRACH) preamble (message 1 simply referred to as msg1) in the uplink. The next generation node B (gNB) detects the message 1 and replies with a random access response (RAR, message 2 simply referred to as msg2). The UE then transmits a UE identification (message 3 simply referred to as msg3) on physical uplink shared channel (PUSCH). Then the gNB transmits a contention resolution message (CRM, message 4 simply referred to as msg4) to the UE to solve conflict caused when multiple UEs transmit the same PRACH preamble. WO 2019/049283 discloses a user terminal including a transmission section that transmits an uplink signal by using an uplink shared channel, the uplink signal having a multicarrier waveform over contiguous frequency resources; and a control section that controls frequency hopping of the uplink signal.

### Summary

This summary is provided to introduce a selection of concepts in a simplified form that are further described below in the detailed description.

One of the objects of the disclosure is to provide another solution for random access procedure.

According to a first aspect of the disclosure, there is provided a method performed by a terminal device. The method comprises determining a frequency hopping configuration for transmission of one or more physical uplink shared channels (PUSCHs) in a request message for random access. The method further comprises transmitting the one or more PUSCHs in the request message based on the frequency hopping configuration. The request message at least comprises a physical random access channel (PRACH) preamble and the one or more PUSCHs.

In an embodiment of the disclosure, the frequency hopping configuration may comprise one or more parameters indicating: enabling and/or disabling of frequency hopping; a starting physical resource block (PRB) for frequency hopping; a frequency offset for frequency hopping; a frequency hopping type which is one of intra-slot hopping, inter-slot hopping, intra-PUSCH occasions (POs) hopping and inter-POs hopping; a number of slots which the one or more PUSCHs span; and a redundancy version (RV) for the more than one PUSCHs.

In an embodiment of the disclosure, the frequency hopping configuration may be determined based on a radio resource control (RRC) signaling. In this way, the PUSCH(s) for the request message of random access can be transmitted with proper frequency hopping configuration.

In an embodiment of the disclosure, the RRC signaling may be a cell-specific RRC signaling or an RRC signaling specific to the terminal device.

In an embodiment of the disclosure, the terminal device may determine to disable frequency hopping when a frequency offset is not configured in the RRC signaling.

In an embodiment of the disclosure, the terminal device may determine to disable frequency hopping when a frequency offset is set to zero in the RRC signaling.

In an embodiment of the disclosure, the one or more parameters in the frequency hopping configuration may be determined as predetermined values. In this way, the PUSCH(s) for the request message of random access can be transmitted with proper frequency hopping configuration.

In an embodiment of the disclosure, the one or more parameters in the frequency hopping configuration may be determined based on a PRACH configuration for the PRACH preamble. In this way, the PUSCH(s) for the request message of random access can be transmitted with proper frequency hopping configuration.

In an embodiment of the disclosure, the PRACH configuration for the PRACH preamble may comprise one or more of: an extended PRACH configuration table from which one or more parameters in the frequency hopping configuration can be retrieved according to a PRACH configuration index; a number of PRACH occasions; a starting PRB of the PRACH preamble; and whether to perform the random access as contention based random access (CBRA) or contention free random access (CFRA).

In an embodiment of the disclosure, the terminal device may determine to enable frequency hopping when the number of PRACH occasions takes a predetermined value.

In an embodiment of the disclosure, a frequency offset for frequency hopping may be determined as a function of the number of PRACH occasions.

In an embodiment of the disclosure, a starting PRB for frequency hopping may be determined as a function of the number of PRACH occasions and/or the starting PRB of the PRACH preamble.

In an embodiment of the disclosure, the one or more parameters in the frequency hopping configuration may be determined based on a PUSCH configuration for the request message. In this way, the PUSCH(s) for the request message of random access can be transmitted with proper frequency hopping configuration.

In an embodiment of the disclosure, the PUSCH configuration for the request message may comprise one or more parameters indicating: enabling and/or disabling of transform precoding; a number of PRBs which one or more POs of one or more sizes span; a position of a PO to be used; a size of a PO set to be used; a position of a PO set to be used; a starting PRB of a PO for a first hop; a starting PRB of a PO set to be used.

In an embodiment of the disclosure, a frequency offset for frequency hopping may be determined as a function of at least one of: the number of PRBs which one or more POs of one or more sizes span; and the position of a PO to be used.

In an embodiment of the disclosure, the frequency offset may be determined as a scaling factor multiplied by the number of PRBs which one or more POs of one or more sizes span.

In an embodiment of the disclosure, a starting PRB for frequency hopping may be determined as a function of at least one of: the number of PRBs which one or more POs of one or more sizes span; the starting PRB of the PO for the first hop; and the starting PRB of a PO set to be used.

In an embodiment of the disclosure, the one or more parameters in the frequency hopping configuration may be determined based on one or more of: whether a cell serving the terminal device uses frequency division duplexing (FDD) or time division duplexing (TDD); different frequency bands in which the terminal device operates; whether a regular uplink carrier or a supplementary uplink carrier is to be used for the random access; whether the random access is to be performed in an initial active uplink bandwidth part (BWP); and a size of an active BWP. In this way, the PUSCH(s) for the request message of random access can be transmitted with proper frequency hopping configuration.

In an embodiment of the disclosure, a frequency offset for frequency hopping may be determined based on the size of the active BWP.

In an embodiment of the disclosure, the method may further comprise providing user data and forwarding the user data to a host computer via the transmission to the base station.

According to a second aspect of the disclosure, there is provided a method performed by a base station. The method comprises determining a frequency hopping configuration to be used by a terminal device for transmission of one or more PUSCHs in a request message for random access. The method further comprises receiving the one or more PUSCHs in a request message for random access based on the frequency hopping configuration, the request message at least comprising a physical random access channel, PRACH, preamble and the one or more PUSCHs..

In an embodiment of the disclosure, the frequency hopping configuration may comprise one or more parameters indicating: enabling and/or disabling of frequency hopping; a starting PRB for frequency hopping; a frequency offset for frequency hopping; a frequency hopping type which is one of intra-slot hopping, inter-slot hopping, intra-POs hopping and inter-POs hopping; a number of slots which the one or more PUSCHs span; and an RV for the more than one PUSCHs.

According to a third aspect of the disclosure, there is provided a terminal device. The terminal device comprises at least one processor and at least one memory. The at least one memory contains instructions executable by the at least one processor, whereby the terminal device is operative to determine a frequency hopping configuration for transmission of one or more PUSCHs in a request message for random access. The terminal device is further operative to transmit the one or more PUSCHs in the request message based on the frequency hopping configuration. The request message at least comprises a PRACH preamble and the one or more PUSCHs.

In an embodiment of the disclosure, the terminal device may be operative to perform the method according to the above first aspect.

According to a fourth aspect of the disclosure, there is provided a base station. The base station comprises at least one processor and at least one memory. The at least one memory contains instructions executable by the at least one processor, whereby the base station is operative to determine a frequency hopping configuration to be used by a terminal device for transmission of one or more PUSCHs in a request message for random access. The base station is further operative to receive the one or more PUSCHs in a request message for random access based on the frequency hopping configuration, the request message at least comprising a physical random access channel, PRACH, preamble and the one or more PUSCHs.

In an embodiment of the disclosure, the base station may be operative to perform the method according to the above second aspect.

### Brief Description of the Drawings

These and other objects, features and advantages of the disclosure will become apparent from the following detailed description of illustrative embodiments thereof, which are to be read in connection with the accompanying drawings.
FIG. 1 is a diagram illustrating a four-step random access procedure in NR;
FIG. 2 is a diagram illustrating a two-step random access procedure in NR;

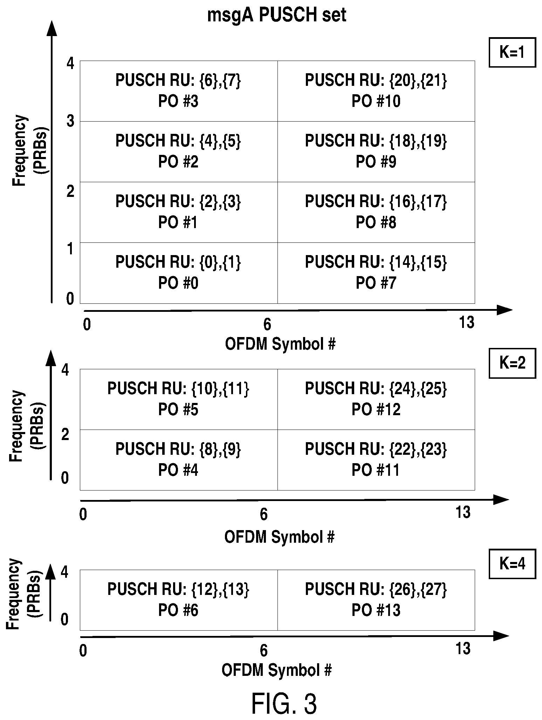

FIG. 3 is a diagram illustrating a PUSCH set for msgA;
FIG. 4 is a diagram illustrating a PRACH configuration in NR;
FIG. 5 is a flowchart illustrating a method implemented at a terminal device according to an embodiment of the disclosure;
FIG. 6 is a flowchart illustrating a method implemented at a base station according to an embodiment of the disclosure;
FIG. 7 is a block diagram showing an apparatus suitable for use in practicing some embodiments of the disclosure;
FIG. 8 is a block diagram showing a terminal device according to an embodiment of the disclosure;
FIG. 9 is a block diagram showing a base station according to an embodiment of the disclosure;
FIG. 10 is a diagram showing a telecommunication network connected via an intermediate network to a host computer in accordance with some embodiments;
FIG. 11 is a diagram showing a host computer communicating via a base station with a user equipment in accordance with some embodiments;
FIG. 12 is a flowchart illustrating a method implemented in a communication system in accordance with some embodiments;
FIG. 13 is a flowchart illustrating a method implemented in a communication system in accordance with some embodiments;
FIG. 14 is a flowchart illustrating a method implemented in a communication system in accordance with some embodiments; and
FIG. 15 is a flowchart illustrating a method implemented in a communication system in accordance with some embodiments.

### Detailed Description

For the purpose of explanation, details are set forth in the following description in order to provide a thorough understanding of the embodiments disclosed. It is apparent, however, to those skilled in the art that the embodiments may be implemented without these specific details or with an equivalent arrangement.

In the four-step random access procedure, the UE transmits PUSCH (message 3) after receiving a timing advance command in the RAR and after adjusting the timing of the PUSCH transmission, allowing PUSCH to be received at the gNB with a timing accuracy within the cyclic prefix (CP). Without this timing advance functionality, a very large CP would be needed in order to be able to demodulate and detect PUSCH, unless the system is applied in a cell with very small distance between the UE and the gNB. Since NR will also support larger cells, there is a need for providing a timing advance to the UE and thus the four-step approach is needed for random access procedure.

FIG. 2 illustrates a 2-step random access procedure. As illustrated in FIG. 2, in a 2-step random access procedure, the step of detecting synchronization signal (SS)/PBCH block and system information is the same as in the 4-step approach, but the initial access is completed in only two steps in order to minimize the number of channel accesses. At the first step, the UE sends a request message for random access (which may be denoted as message A, simply referred to as msgA), e.g. including random access preamble together with higher layer data such as RRC connection request possibly with some additional payload on PUSCH. At the second step, the gNB sends a response message (which may be denoted as message B, simply referred to as msgB), e.g. including UE identifier assignment, timing advance information, and contention resolution message, etc.

In NR Release 15 (Rel-15), msg3 frequency hopping is enabled or disabled by the frequency hopping flag indicated in RAR message for the initial msg3 transmission, as shown in below Table 1 copied from the 3rd generation partnership project (3GPP) technical specification (TS) 38.213 V15.5.0 (see Table 8.2-1), and indicated in downlink control information (DCI) format with cyclic redundancy check (CRC) scrambled by temporary cell radio network temporary identifier (TC-RNTI) for the retransmissions of msg3.

**Table 1: Random Access Response Grant Content field size**

| **RAR grant field** | **Number of bits** |
|---|---|
| Frequency hopping flag | 1 |
| PUSCH frequency resource allocation | 14 |
| PUSCH time resource allocation | 4 |
| MCS | 4 |
| TPC command for PUSCH | 3 |
| CSI request | 1 |

Specifically, the "frequency hopping flag" indicated in the DCI format 0_0 with CRC scrambled by the TC-RNTI is Frequency hopping flag which occupies 1 bit according to Table 7.3.1.1.1-3, as defined in Subclause 6.3 of TS 38.214 V15.5.0.

For msg3 PUSCH transmissions, frequency hopping is not allowed for the PUSCH transmissions with resource allocation type 0, which cannot be used when transform precoding is enabled or when the PUSCH is scheduled by DCI format 0_0 or by RAR. In addition, there are 2 types of the PUSCH hopping, i.e. intra-slot or inter-slot frequency hopping. The inter-slot hopping is only applied for the multi-slot PUSCH transmissions.

MsgA PUSCH may be transmitted on time/frequency (T/F) resource referred to as PUSCH occasions (POs). A set of resources containing multiple PUSCH occasions may be defined. For example, it may be called 'msgA PUSCH set'. A PUSCH resource unit (PUSCH RU) may be defined as the PUSCH occasion (PO) and demodulation reference signal (DMRS) port/DMRS sequence used for msgA payload transmission. The PUSCH RU allows multi-user multiple-input multiple-output (MU-MIMO) reception. Each PUSCH RU occupies a contiguous set of subcarriers and symbols. A msgA PUSCH set occurs periodically and has a known length in symbols and position in frequency. A msgA PUSCH set can contain multiple POs contiguous in frequency and in time (including guard band or period if defined).

PUSCH RUs have 'K' PRBs. K can vary and a given PRB can contain PUSCH RUs with different size. K is identified by which preamble is used. If a PRB contains PUSCH RUs with different size K, DMRS identifiers (IDs) may be a function of size. That is, Total # DMRS = (# PO Sizes) x (PUSCH RUs per PO). UE can randomly select PUSCH RU index 'n' out of the configured set.

In NR Rel-15, the time and frequency resource on which a PRACH preamble is transmitted is defined as a PRACH occasion. In this disclosure, the PRACH occasion may be also called RACH occasion, or random access (RA) occasion, or in short RO. The RO used for the transmission of the preambles in 2-step RA may be called 2-step RO, while the RO used for the transmission of the preambles in 4-step RA may be called 4-step RO.

The time resources and preamble format for PRACH transmission is configured by a PRACH configuration index, which indicates a row in a PRACH configuration table specified in TS 38.211 Tables 6.3.3.2-2, 6.3.3.2-3, 6.3.3.2-4 for FR1 paired spectrum, FR1 unpaired spectrum and FR2 with unpaired spectrum, respectively. FR1 represents a first frequency range, e.g. a low frequency range. FR2 represents a second frequency range, e.g. a high frequency range.

For example, in the Table 6.3.3.2-3 for FR1 unpaired spectrum for PRACH preamble format 0, the value of x indicates the PRACH configuration period in number of system frames. The value of y indicates the system frame within each PRACH configuration period on which the PRACH occasions are configured. For instance, if y is set to 0, then, it means PRACH occasions only configured in the first frame of each PRACH configuration period. The values in the column "subframe number" tells on which subframes are configured with PRACH occasion. The values in the column "starting symbol" is the symbol index.

In case of TDD, semi-statically configured downlink (DL) parts and/or actually transmitted synchronization signal blocks (SSBs) can override and invalidate some time-domain PRACH occasions defined in the PRACH configuration table. More specifically, PRACH occasions in the uplink (UL) part are always valid, and a PRACH occasion within the X part is valid as long as it does not precede or collide with an SSB in the RACH slot and it is at least N symbols after the DL part and the last symbol of an SSB. N is 0 or 2 depending on PRACH format and subcarrier spacing.

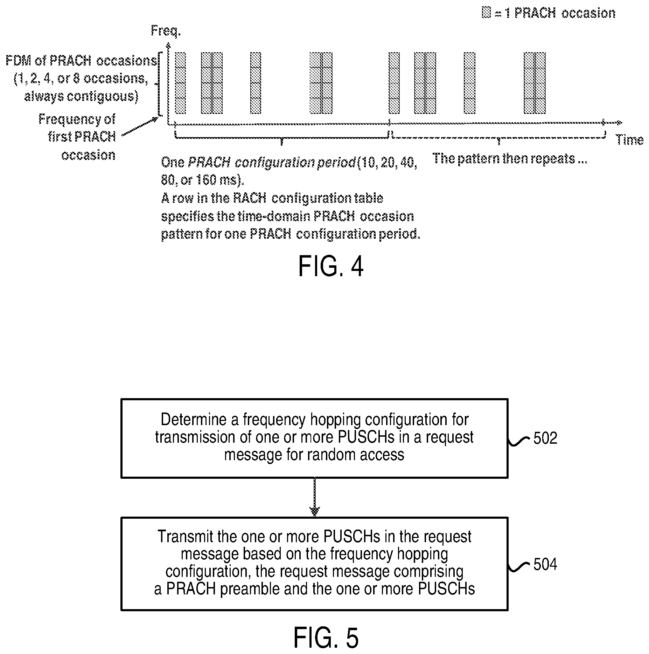

In the frequency domain, NR supports multiple frequency-multiplexed PRACH occasions on the same time-domain PRACH occasion. This is mainly motivated by the support of analog beam sweeping in NR such that the PRACH occasions associated to one SSB are configured at the same time instance but different frequency locations. The number of PRACH occasions frequency division multiplexed (FDMed) in one time domain PRACH occasion, can be 1, 2, 4, or 8. FIG. 4 gives an example of a PRACH occasion configuration in NR.

In NR Rel-15, there are up to 64 sequences that can be used as random-access preambles per PRACH occasion in each cell. The RRC parameter *totalNumberOfRA-Preambles* determines how many of these 64 sequences are used as random-access preambles per PRACH occasion in each cell. The 64 sequences are configured by including firstly all the available cyclic shifts of a root Zadoff-Chu sequence, and secondly in the order of increasing root index, until 64 preambles have been generated for the PRACH occasion.

Different from msg3 PUSCH, the msgA PUSCH is not scheduled by any signaling or message for the initial transmission. Thus, it would be desirable to provide methods on how to enable or disable the msgA PUSCH hopping, at least for its initial transmission.

Besides, whether inter-slot hopping can be supported or intra-slot hopping can be supported may depend on the msgA PUSCH transmission schemes, e.g. whether msgA PUSCH repetition is supported for msgA PUSCH. The PUSCH resource allocation type may also need to be considered as it will affect the possibility of the frequency hopping.

The present disclosure proposes an improved solution for 2-step random access procedure. The solution may be applied to a wireless communication system including a terminal device and a base station. The terminal device can communicate through a radio access communication link with the base station. The base station can provide radio access communication links to terminal devices that are within its communication service cell. The base station may be, for example, a gNB in NR. Note that the communications may be performed between the terminal device and the base station according to any suitable communication standards and protocols. The terminal device may also be referred to as, for example, device, access terminal, user equipment (UE), mobile station, mobile unit, subscriber station, or the like. It may refer to any end device that can access a wireless communication network and receive services therefrom. By way of example and not limitation, the terminal device may include a portable computer, an image capture terminal device such as a digital camera, a gaming terminal device, a music storage and playback appliance, a mobile phone, a cellular phone, a smart phone, a tablet, a wearable device, a personal digital assistant (PDA), or the like.

In an Internet of things (IoT) scenario, a terminal device may represent a machine or other device that performs monitoring and/or measurements, and transmits the results of such monitoring and/or measurements to another terminal device and/or a network equipment. In this case, the terminal device may be a machine-to-machine (M2M) device, which may, in a 3GPP context, be referred to as a machine-type communication (MTC) device. Particular examples of such machines or devices may include sensors, metering devices such as power meters, industrial machineries, bikes, vehicles, or home or personal appliances, e.g. refrigerators, televisions, personal wearables such as watches, and so on.

Now, several embodiments will be described to explain the improved solution for random access procedure. As a first embodiment, msgA PUSCH frequency hopping and/or a frequency offset can be configured in RRC messages, which can be cell-specific messages and/or the UE specific RRC messages. The UE specific messages can be used when the UE is in RRC connected mode.

As an example, in the PUSCH-ConfigCommon information element (IE), the underlined parameters given below can be configured to control the msgA PUSCH frequency hopping for cell-specific signaling.

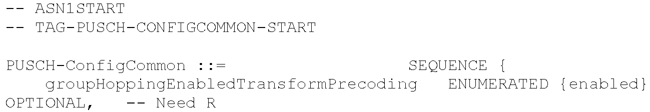

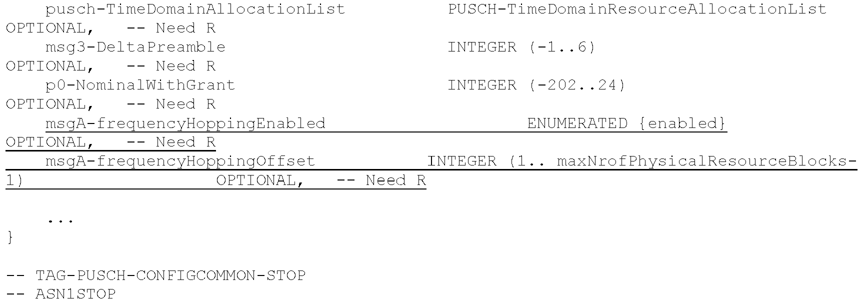

| |
|---|
| ***msgA-frequencyHoppingEnabled*** |
| The frequency hopping is enabled for msgA. |
| ***msgA-frequencyHoppingOffset*** |
| Enables intra-slot frequency hopping with the given frequency hopping offset. Frequency hopping offset is used when frequency hopping is enabled (see TS 38.214, clause 6.1.2). |

As another example, in the PUSCH-Config IE, similar parameters can be configured to control the msgA PUSCH frequency hopping for UE-specific signaling.

As a second embodiment, a frequency offset can be a predetermined. As a first option, the frequency offset is equal to $f \times {N}_{RB}^{msgA , PUSCH}$, where *f* is a scaling factor and ${N}_{RB}^{msgA , PUSCH}$ is the total span of PRBs that the PUSCH POs occupy. As an example, *f* may take a predefined value. The possible values may include, but not limited to, 1, 1/2, and 1/4. As another example, *f* can be a signaled value from the network.

As a second option, a frequency offset can be associated to one or more of the following factors. The first factor is the total number of PRBs that the PUSCH occasions span. For example, the RB offset value should be no less than the total maximum number of PRBs that the msgA PUSCH occasions of the first hop occupy. The PUSCH occasions can be of one or multiple sizes. The second factor is the size of the active BWP where the msgA is transmitted as a part of the random access procedure. The third factor is the PUSCH occasion position. For example, when a msgA PUSCH in one current occasion is to be repeated in another occasion, the another occasion can be determined by the current occasion to make sure they are on different PRBs within a PUSCH occasion set. The fourth factor is the number of PRBs for one PUSCH occasion. The fifth factor is the PUSCH occasion set position and size.

As a third option, a frequency offset is relative to a start PRB which can be or a function of: the start PRB of a PUSCH occasion for the first hop; the start PRB of a set of PUSCH occasions; the start PRB of a corresponding RACH occasion for the corresponding msgA preamble transmission. Note that the start PRB may be signaled in RRC messages, e.g. in system information block type 1 (SIB1).

As a third embodiment, the frequency hopping flag can be implicitly indicated by the configuration offset. As an example, when the frequency offset is not configured, it means frequency hopping is not enabled. As another example, when the frequency offset is set to 0, there is no frequency hopping.

As a fourth embodiment, the frequency hopping type for msgA PUSCH can be one or more of: intra-slot, inter-slot, intra-POs, and inter-POs. The intra-slot means the hopping is taken within the allocated slot for the PUSCH. The inter-slot means that when a multi-slot transmission is supported for msgA PUSCH, frequency hopping is applied between the slots. Here the multi-slot transmission can be one of: 1) repetition of msgA PUSCH in different slots but on the same orthogonal frequency division multiplexing (OFDM) symbols in each slot; and 2) repetition of msgA PUSCH in different slots and also on different OFDM symbols in each slot. The intra-POs means that the msgA PUSCH can be repeated within a PO set, but on different PRBs in order to achieve frequency diversity. In some case, PO can span over less than a slot, then the repetition is sent on different frequency allocations within a slot. The inter-POs means that the msgA PUSCH can be repeated between different PO set, and on different PRBs in order to achieve frequency diversity.

Which type of frequency hopping is used can be RRC configured, which can be cell-specific signaling, e.g. in SIB 1, and/or UE specific signaling which can be applied when the UE is in RRC connected mode. As an example, when intra-slot and inter-slot is applied, a cell-specific signaling can be included in the PUSCH-ConfigCommon IE for indication of whether inter-slot or intra-slot frequency hopping is used. As shown below, in the PUSCH-ConfigCommon IE, the underlined parameters given below can be configured to control the msgA PUSCH frequency hopping.

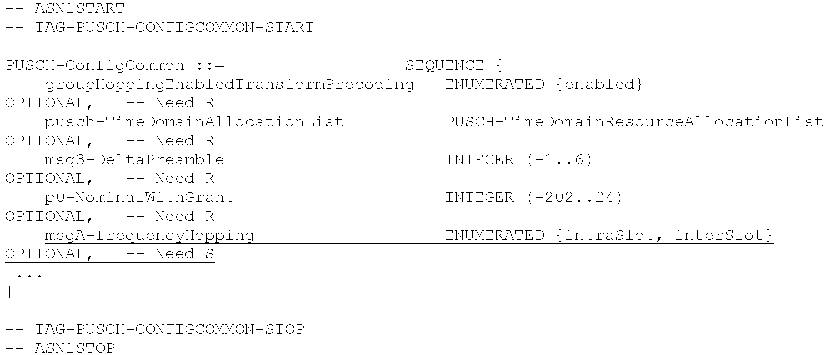

| |
|---|
| ***msgA-frequencyHopping*** |
| The value *intraSlot* enables 'Intra-slot frequency hopping' and the value *interSlot* enables 'Inter-slot frequency hopping'. If the field is absent, frequency hopping is not configured. |

As another example, similar parameters can be put in PUSCH-Config IE for UE specific signaling.

As a fifth embodiment, to support inter-slot hopping, or intra-POs hopping, or inter-POs hopping, the repetition number and/or the redundancy version (RV) pattern can be either signaled in the RRC messages or predetermined. As an example, some signalling can be included in the PUSCH-ConfigCommon IE to support the repetitions of msgA PUSCH, as shown below.

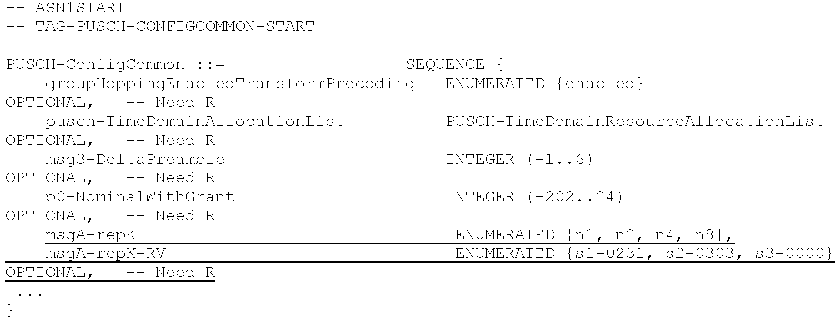

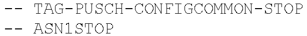

| |
|---|
| ***msgA-repK-RV*** |
| The redundancy version (RV) sequence to use. The network configures this field if repetitions are used, i.e., if *repK* is set to *n2, n4* or *n8.* Otherwise, the field is absent. |
| ***msgA-repK*** |
| The number of repetitions of K. |

As a sixth embodiment, msgA PUSCH transmission configuration can be determined by one or more parameters of the msgA preamble and/or msgA PUSCH configuration. As a first option, the msgA PUSCH transmission configuration, including its frequency hopping configuration, can be determined by cell-specific PRACH configuration for msgA preamble. Specifically, some of the cell-specific PRACH configuration may be provided by e.g. rach-ConfigGeneric (or equivalent) within RACH-ConfigCommon IE. Similarly, some of the UE-specific PRACH configuration may be provided by e.g. rach-ConfigGeneric (or equivalent) within RACH-Config IE. The PRACH frequency resources *n*_{RA} ∈ {0,1, *... , M -* 1}, where M equals the higher-layer parameter *msg1-FDM* (or equivalent, or *msgA-FDM* for the number of msgA PRACH occasions FDMed), are numbered in increasing order within the initial active uplink BWP during the initial access, starting from the lowest frequency. The value of M can be 1, 2, 4, or 8. For example, the msgA PUSCH frequency hopping configuration can be a function of M value.

In one example, msgA PUSCH frequency hopping is possible only when M takes certain value(s), e.g., M=1, or M={1 or 2}. In another example, msgA PUSCH frequency offset (when frequency hopping is enabled) is a function of M. For example, the frequency offset is equal to ${N}_{RB}^{msgA , PUSCH} / M$.

In still another example, msgA PUSCH starting RB for frequency hopping (FH) is a function of *msg1-FrequencyStart* (or equivalent, or *msgA-FrequencyStart* for the start PRB of the msgA preamble or for the start PRB of the msgA PUSCH occasion or the start PRB for the whole set of PUSCH occasions). As an exemplary example, RBₛₜₐᵣₜ is equal to ${N}_{RB , start}^{msgA}$, where ${N}_{RB , start}^{msgA}$ denotes the PRB index provided by *msg1-FrequencyStart or msgA-FrequencyStart.* Here RBₛₜₐᵣₜ represents msgA PUSCH starting RB for FH. As another exemplary example, RBₛₜₐᵣₜ is equal to ${N}_{RB , start}^{msgA} + {N}_{RB}^{msgA , PUSCH} / M$ .

As a second option, the msgA PUSCH frequency hopping configuration depends on if transform precoder of msgA PUSCH is enabled. As a third option, the msgA PUSCH frequency hopping configuration depends on if the 2-step RACH is performed as contention based random access (CBRA) or contention free random access (CFRA). Frequency hopping of msgA PUSCH is particularly useful to combat interference when the 2-step RACH is contention-based.

As a seventh embodiment, msgA PUSCH FH configuration is part of 2-Step RACH configuration table. In this embodiment, the RACH configuration table is extended to include the msgA PUSCH frequency hopping parameter(s). For example, for each RACH configuration index indicating a row in the RACH configuration table, corresponding msgA PUSCH frequency hopping parameter(s) are added into this row. Thus, when higher layer parameter prach-ConfigurationIndex (or equivalent) is used to look up the PRACH configuration in the table, the msgA PUSCH FH parameter(s) are also obtained.

The FH parameter(s) may include one or more of the following: enable msgA PUSCH FH or not; msgA PUSCH starting RB for FH, RBₛₜₐᵣₜ; msgA PUSCH FH offset; and the number of slots K the msgA PUSCH spans. If K>1, inter-slot frequency hopping of msgA PUSCH can be applied. If K<=1, only intra-slot frequency hopping of msgA PUSCH can be applied.

As an eighth embodiment, msgA PUSCH FH configuration takes into account other system configuration. In one example, msgA PUSCH FH configuration is affected by FDD or TDD of the cell configuration. For instance, In the case of FDD, msgA PUSCH(s) have all symbols and slots available for PUSCH transmission, and no restriction needs to be applied to inter-slot and intra-slot FH due to UL/DL transmission pattern.

On other hand, in the case of TDD, the UL/DL transmission pattern needs to be taken into account in PUSCH transmission. PUSCH transmission is valid only when the associated symbols are for UL. For example, the semi-statically configured DL symbols and/or slots may override the msgA PUSCH transmission, including its intra-slot and inter-slot transmission. Semi-statically configured UL symbols and/or slots can always be used for msgA PUSCH transmission. Semi-statically configured flexible symbols/slots can be used for msgA PUSCH transmission unless they collide with the indicated actual SSB transmission. Here the semi-static DL/UL assignment is done via cell-specific RRC configuration and/or UE-specific RRC configuration. In RRC connected mode, the UE in 2-step RA can use cell-specific and the UE-specific RRC configuration. In RRC idle/inactive state, the UE in 2-step RA can use the cell-specific RRC configuration.

In another example, msgA PUSCH FH configuration takes into account of the operating spectrum. For instance, the configuration may be different depending on if the spectrum belongs to FR1 (low frequency band 38.101-1) or FR2 (high frequency band 38.101-2). Another example is that different FH configuration may be introduced for wide or narrow band. Some predetermined number of PRBs can be used as a threshold to determine whether it is a narrow or wide band.

In another example, msgA PUSCH FH configuration takes into account if the uplink carrier where the 2-step RACH occurs is a regular UL carrier or a supplementary UL carrier. In another example, msgA PUSCH FH configuration may depend on if the 2-step RACH is performed in the initial active UL BWP or not.

Hereinafter, the solution will be further described with reference to FIGs. 5-15. FIG. 5 is a flowchart illustrating a method implemented at a terminal device according to an embodiment of the disclosure. At block 502, the terminal device determines a frequency hopping configuration for transmission of one or more PUSCHs in a request message for random access. At block 504, the terminal device transmits the one or more PUSCHs in the request message based on the frequency hopping configuration. The request message at least comprises a PRACH preamble and the one or more PUSCHs.

The random access may be a two-step random access. The frequency hopping configuration may comprise, but not limited to, one or more parameters indicating: enabling and/or disabling frequency hopping; a starting PRB for frequency hopping; a frequency offset for frequency hopping; a frequency hopping type which may be one of intra-slot hopping, inter-slot hopping, intra-POs hopping and inter-POs hopping; the number of slots which the one or more PUSCHs span; and a redundancy version (RV) for the more than one PUSCHs.

There may be six options for implementation of block 502. As the first option, the frequency hopping configuration may be determined based on an RRC signaling. Thus, the determination at block 502 may comprise receiving at least part of the frequency hopping configuration from a base station in an RRC signaling. The at least part of the frequency hopping configuration may be either explicitly signaled in the RRC signaling or implicitly indicated in the RRC signaling. The RRC signaling may be a cell-specific RRC signaling or an RRC signaling specific to the terminal device. As an example, the terminal device may determine to disable frequency hopping when a frequency offset is not configured in the RRC signaling. As another example, the terminal device may determine to disable frequency hopping when a frequency offset is set to zero in the RRC signaling.

As the second option, the one or more parameters in the frequency hopping configuration may be determined as predetermined values. As an exemplary example, if an RRC signaling only indicates enabling of frequency hopping but does not indicate the frequency offset, the terminal device may use a predetermined value as the frequency offset. Similarly, any other parameter besides the frequency offset may be determined as a predetermined value.

As the third option, the one or more parameters in the frequency hopping configuration may be determined based on a PRACH configuration for the PRACH preamble. The PRACH configuration for the PRACH preamble may comprise, but not limited to, one or more of: an extended PRACH configuration table from which one or more parameters in the frequency hopping configuration can be retrieved according to a PRACH configuration index; the number of PRACH occasions; a starting PRB of the PRACH preamble; and whether to perform the random access as CBRA or CFRA.

As an example, the terminal device may determine to enable frequency hopping when the number of PRACH occasions takes a predetermined value. As another example, the frequency offset for frequency hopping may be determined as a function of the number of PRACH occasions. As another example, the starting PRB for frequency hopping may be determined as a function of the number of PRACH occasions and/or the starting PRB of the PRACH preamble.

As the fourth option, the one or more parameters in the frequency hopping configuration may be determined based on a PUSCH configuration for the request message. The PUSCH configuration for the request message may comprise, but not limited to, one or more parameters indicating: enabling and/or disabling of transform precoding; the number of PRBs which one or more POs of one or more sizes span; the position of a PO to be used; the size of a PO set to be used; the position of a PO set to be used; the starting PRB of a PO for a first hop; the starting PRB of a PO set to be used.

As an example, the frequency offset for frequency hopping may be determined as a function of at least one of: the number of PRBs which one or more POs of one or more sizes span; and the position of a PO to be used. For example, the frequency offset may be determined as a scaling factor multiplied by the number of PRBs which one or more POs of one or more sizes span.

As another example, the starting PRB for frequency hopping may be determined as a function of at least one of: the number of PRBs which one or more POs of one or more sizes span; the starting PRB of the PO for the first hop; and the starting PRB of a PO set to be used.

As the fifth option, the one or more parameters in the frequency hopping configuration may be determined based on one or more of: whether a cell serving the terminal device uses FDD or TDD; different frequency bands in which the terminal device operates; whether a regular uplink carrier or a supplementary uplink carrier is to be used for the random access; whether the random access is to be performed in an initial active uplink BWP; and the size of an active BWP. For example, the frequency offset for frequency hopping may be determined based on the size of the active BWP. As the sixth option, a combination of any two or more of the above first to fifth options may be used. No matter which option is used, the PUSCH(s) for the request message of random access can be transmitted with proper frequency hopping configuration.

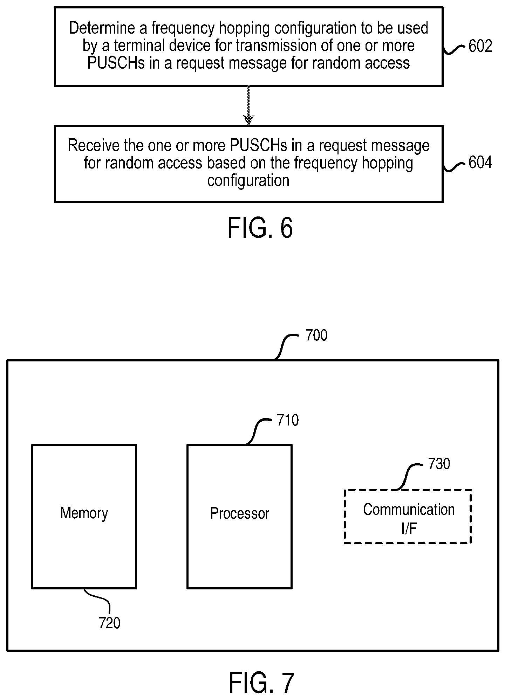

FIG. 6 is a flowchart illustrating a method implemented at a base station according to an embodiment of the disclosure. At block 602, the base station determines a frequency hopping configuration to be used by a terminal device for transmission of one or more PUSCHs in a request message for random access. The random access may be a two-step random access. The frequency hopping configuration may comprise, but not limited to, one or more parameters indicating: enabling and/or disabling frequency hopping; a starting PRB for frequency hopping; a frequency offset for frequency hopping; a frequency hopping type which may be one of intra-slot hopping, inter-slot hopping, intra-POs hopping and inter-POs hopping; the number of slots which the one or more PUSCHs span; and a redundancy version (RV) for the more than one PUSCHs. The principles described above for the determination of the frequency hopping configuration at the side of the terminal device may be similarly applied to the side of the base station. At block 604, the base station receives the one or more PUSCHs in a request message for random access based on the frequency hopping configuration.

Optionally, the base station may indicate the frequency hopping configuration to the terminal device in an RRC signaling. In this way, the frequency hopping configuration can be provided to the terminal device for transmission of the PUSCH(s) for the request message of random access. The RRC signaling may be a cell-specific RRC signaling or an RRC signaling specific to the terminal device. The frequency hopping configuration may be either explicitly signaled in the RRC signaling or implicitly indicated in the RRC signaling. It should be noted that two blocks shown in succession in the figures may, in fact, be executed substantially concurrently, or the blocks may sometimes be executed in the reverse order, depending upon the functionality involved.

Based on the above description, at least one aspect of the present disclosure provides a method implemented in a communication system. The method comprises, at a base station, determining a frequency hopping configuration to be used by a terminal device for transmission of one or more PUSCHs in a request message for random access. The method further comprises, at a terminal device, determining the frequency hopping configuration for transmission of one or more PUSCHs in a request message for random access. The method further comprises, at the terminal device, transmitting the one or more PUSCHs in the request message based on the frequency hopping configuration. The request message at least comprises a PRACH preamble and the one or more PUSCHs. The method further comprises, at the base station, receiving the one or more PUSCHs in the request message for random access based on the frequency hopping configuration.

FIG. 7 is a block diagram showing an apparatus suitable for use in practicing some embodiments of the disclosure. For example, any one of the terminal device and the base station described above may be implemented through the apparatus 700. As shown, the apparatus 700 may include a processor 710, a memory 720 that stores a program, and optionally a communication interface 730 for communicating data with other external devices through wired and/or wireless communication.

The program includes program instructions that, when executed by the processor 710, enable the apparatus 700 to operate in accordance with the embodiments of the present disclosure, as discussed above. That is, the embodiments of the present disclosure may be implemented at least in part by computer software executable by the processor 710, or by hardware, or by a combination of software and hardware.

The memory 720 may be of any type suitable to the local technical environment and may be implemented using any suitable data storage technology, such as semiconductor based memory devices, flash memories, magnetic memory devices and systems, optical memory devices and systems, fixed memories and removable memories. The processor 710 may be of any type suitable to the local technical environment, and may include one or more of general purpose computers, special purpose computers, microprocessors, digital signal processors (DSPs) and processors based on multi-core processor architectures, as non-limiting examples.

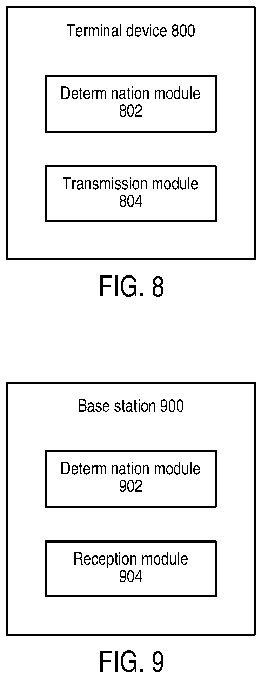

FIG. 8 is a block diagram showing a terminal device according to an embodiment of the disclosure. As shown, the terminal device 800 comprises a determination module 802 and a transmission module 804. The determination module 802 may be configured to determine a frequency hopping configuration for transmission of one or more PUSCHs in a request message for random access, as described above with respect to block 502. The transmission module 804 may be configured to transmit the one or more PUSCHs in the request message based on the frequency hopping configuration, as described above with respect to block 504. The request message at least comprises a PRACH preamble and the one or more PUSCHs.

FIG. 9 is a block diagram showing a base station according to an embodiment of the disclosure. As shown, the base station 900 comprises a determination module 902 and a reception module 904. The determination module 902 may be configured to determine a frequency hopping configuration to be used by a terminal device for transmission of one or more PUSCHs in a request message for random access, as described above with respect to block 602. The reception module 904 may be configured to receive the one or more PUSCHs in a request message for random access based on the frequency hopping configuration, as described above with respect to block 604. The modules described above may be implemented by hardware, or software, or a combination of both.

Based on the above description, at least one aspect of the present disclosure provides a communication system. The communication system comprises a base station configured to: determine a frequency hopping configuration to be used by a terminal device for transmission of one or more PUSCHs in a request message for random access; and receive the one or more PUSCHs in the request message for random access based on the frequency hopping configuration. The communication system further comprises the terminal device configured to: determine the frequency hopping configuration for transmission of one or more PUSCHs in a request message for random access; and transmit the one or more PUSCHs in the request message based on the frequency hopping configuration. The request message at least comprises a PRACH preamble and the one or more PUSCHs.

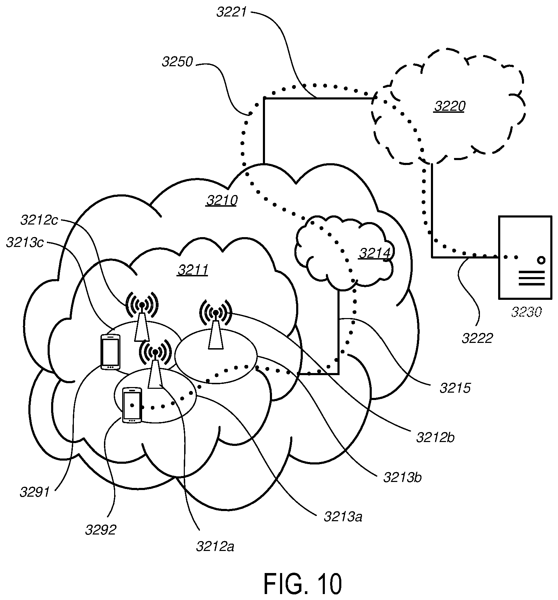

With reference to FIG. 10, in accordance with an embodiment, a communication system includes telecommunication network 3210, such as a 3GPP-type cellular network, which comprises access network 3211, such as a radio access network, and core network 3214. Access network 3211 comprises a plurality of base stations 3212a, 3212b, 3212c, such as NBs, eNBs, gNBs or other types of wireless access points, each defining a corresponding coverage area 3213a, 3213b, 3213c. Each base station 3212a, 3212b, 3212c is connectable to core network 3214 over a wired or wireless connection 3215. A first UE 3291 located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

Telecommunication network 3210 is itself connected to host computer 3230, which may be embodied in the hardware and/or software of a standalone server, a cloud-implemented server, a distributed server or as processing resources in a server farm. Host computer 3230 may be under the ownership or control of a service provider, or may be operated by the service provider or on behalf of the service provider. Connections 3221 and 3222 between telecommunication network 3210 and host computer 3230 may extend directly from core network 3214 to host computer 3230 or may go via an optional intermediate network 3220. Intermediate network 3220 may be one of, or a combination of more than one of, a public, private or hosted network; intermediate network 3220, if any, may be a backbone network or the Internet; in particular, intermediate network 3220 may comprise two or more sub-networks (not shown).

The communication system of FIG. 10 as a whole enables connectivity between the connected UEs 3291, 3292 and host computer 3230. The connectivity may be described as an over-the-top (OTT) connection 3250. Host computer 3230 and the connected UEs 3291, 3292 are configured to communicate data and/or signaling via OTT connection 3250, using access network 3211, core network 3214, any intermediate network 3220 and possible further infrastructure (not shown) as intermediaries. OTT connection 3250 may be transparent in the sense that the participating communication devices through which OTT connection 3250 passes are unaware of routing of uplink and downlink communications. For example, base station 3212 may not or need not be informed about the past routing of an incoming downlink communication with data originating from host computer 3230 to be forwarded (e.g., handed over) to a connected UE 3291. Similarly, base station 3212 need not be aware of the future routing of an outgoing uplink communication originating from the UE 3291 towards the host computer 3230.

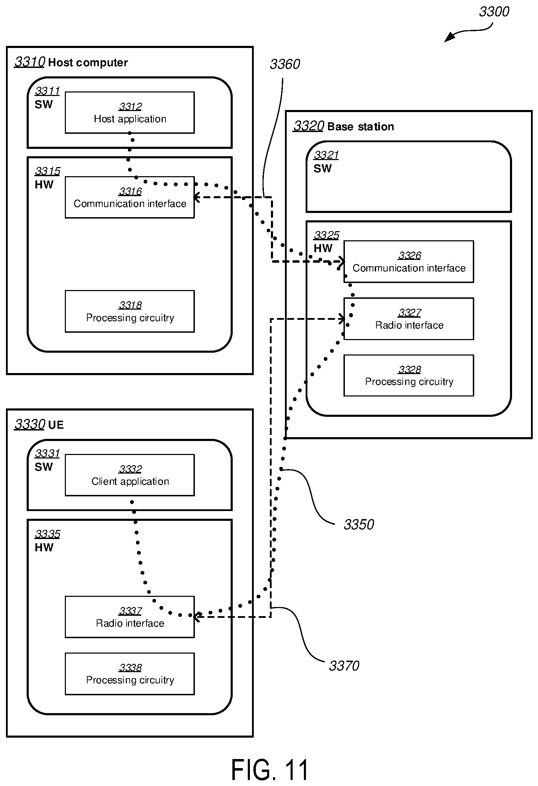

Example implementations, in accordance with an embodiment, of the UE, base station and host computer discussed in the preceding paragraphs will now be described with reference to FIG. 11. In communication system 3300, host computer 3310 comprises hardware 3315 including communication interface 3316 configured to set up and maintain a wired or wireless connection with an interface of a different communication device of communication system 3300. Host computer 3310 further comprises processing circuitry 3318, which may have storage and/or processing capabilities. In particular, processing circuitry 3318 may comprise one or more programmable processors, application-specific integrated circuits, field programmable gate arrays or combinations of these (not shown) adapted to execute instructions. Host computer 3310 further comprises software 3311, which is stored in or accessible by host computer 3310 and executable by processing circuitry 3318. Software 3311 includes host application 3312. Host application 3312 may be operable to provide a service to a remote user, such as UE 3330 connecting via OTT connection 3350 terminating at UE 3330 and host computer 3310. In providing the service to the remote user, host application 3312 may provide user data which is transmitted using OTT connection 3350.

Communication system 3300 further includes base station 3320 provided in a telecommunication system and comprising hardware 3325 enabling it to communicate with host computer 3310 and with UE 3330. Hardware 3325 may include communication interface 3326 for setting up and maintaining a wired or wireless connection with an interface of a different communication device of communication system 3300, as well as radio interface 3327 for setting up and maintaining at least wireless connection 3370 with UE 3330 located in a coverage area (not shown in FIG. 11) served by base station 3320. Communication interface 3326 may be configured to facilitate connection 3360 to host computer 3310. Connection 3360 may be direct or it may pass through a core network (not shown in FIG. 11) of the telecommunication system and/or through one or more intermediate networks outside the telecommunication system. In the embodiment shown, hardware 3325 of base station 3320 further includes processing circuitry 3328, which may comprise one or more programmable processors, application-specific integrated circuits, field programmable gate arrays or combinations of these (not shown) adapted to execute instructions. Base station 3320 further has software 3321 stored internally or accessible via an external connection.

Communication system 3300 further includes UE 3330 already referred to. Its hardware 3335 may include radio interface 3337 configured to set up and maintain wireless connection 3370 with a base station serving a coverage area in which UE 3330 is currently located. Hardware 3335 of UE 3330 further includes processing circuitry 3338, which may comprise one or more programmable processors, application-specific integrated circuits, field programmable gate arrays or combinations of these (not shown) adapted to execute instructions. UE 3330 further comprises software 3331, which is stored in or accessible by UE 3330 and executable by processing circuitry 3338. Software 3331 includes client application 3332. Client application 3332 may be operable to provide a service to a human or non-human user via UE 3330, with the support of host computer 3310. In host computer 3310, an executing host application 3312 may communicate with the executing client application 3332 via OTT connection 3350 terminating at UE 3330 and host computer 3310. In providing the service to the user, client application 3332 may receive request data from host application 3312 and provide user data in response to the request data. OTT connection 3350 may transfer both the request data and the user data. Client application 3332 may interact with the user to generate the user data that it provides.

It is noted that host computer 3310, base station 3320 and UE 3330 illustrated in FIG. 11 may be similar or identical to host computer 3230, one of base stations 3212a, 3212b, 3212c and one of UEs 3291, 3292 of FIG. 10, respectively. This is to say, the inner workings of these entities may be as shown in FIG. 11 and independently, the surrounding network topology may be that of FIG. 10.

In FIG. 11, OTT connection 3350 has been drawn abstractly to illustrate the communication between host computer 3310 and UE 3330 via base station 3320, without explicit reference to any intermediary devices and the precise routing of messages via these devices. Network infrastructure may determine the routing, which it may be configured to hide from UE 3330 or from the service provider operating host computer 3310, or both. While OTT connection 3350 is active, the network infrastructure may further take decisions by which it dynamically changes the routing (e.g., on the basis of load balancing consideration or reconfiguration of the network).

Wireless connection 3370 between UE 3330 and base station 3320 is in accordance with the teachings of the embodiments described throughout this disclosure. One or more of the various embodiments improve the performance of OTT services provided to UE 3330 using OTT connection 3350, in which wireless connection 3370 forms the last segment. More precisely, the teachings of these embodiments may improve the latency and thereby provide benefits such as reduced user waiting time.

A measurement procedure may be provided for the purpose of monitoring data rate, latency and other factors on which the one or more embodiments improve. There may further be an optional network functionality for reconfiguring OTT connection 3350 between host computer 3310 and UE 3330, in response to variations in the measurement results. The measurement procedure and/or the network functionality for reconfiguring OTT connection 3350 may be implemented in software 3311 and hardware 3315 of host computer 3310 or in software 3331 and hardware 3335 of UE 3330, or both. In embodiments, sensors (not shown) may be deployed in or in association with communication devices through which OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of OTT connection 3350 may include message format, retransmission settings, preferred routing etc.; the reconfiguring need not affect base station 3320, and it may be unknown or imperceptible to base station 3320. Such procedures and functionalities may be known and practiced in the art. In certain embodiments, measurements may involve proprietary UE signaling facilitating host computer 3310's measurements of throughput, propagation times, latency and the like. The measurements may be implemented in that software 3311 and 3331 causes messages to be transmitted, in particular empty or 'dummy' messages, using OTT connection 3350 while it monitors propagation times, errors etc.

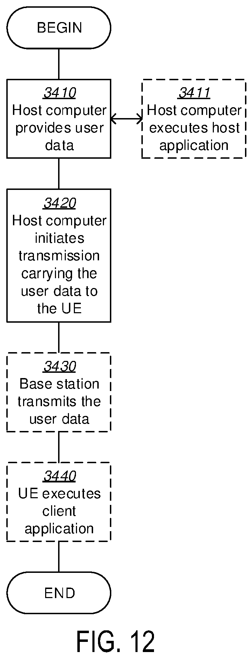

FIG. 12 is a flowchart illustrating a method implemented in a communication system, in accordance with one embodiment. The communication system includes a host computer, a base station and a UE which may be those described with reference to FIGs. 10 and 11. For simplicity of the present disclosure, only drawing references to FIG. 12 will be included in this section. In step 3410, the host computer provides user data. In substep 3411 (which may be optional) of step 3410, the host computer provides the user data by executing a host application. In step 3420, the host computer initiates a transmission carrying the user data to the UE. In step 3430 (which may be optional), the base station transmits to the UE the user data which was carried in the transmission that the host computer initiated, in accordance with the teachings of the embodiments described throughout this disclosure. In step 3440 (which may also be optional), the UE executes a client application associated with the host application executed by the host computer.

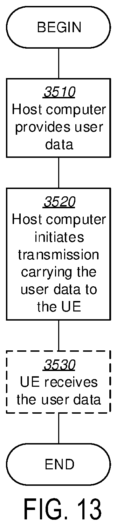

FIG. 13 is a flowchart illustrating a method implemented in a communication system, in accordance with one embodiment. The communication system includes a host computer, a base station and a UE which may be those described with reference to FIGs. 10 and 11. For simplicity of the present disclosure, only drawing references to FIG. 13 will be included in this section. In step 3510 of the method, the host computer provides user data. In an optional substep (not shown) the host computer provides the user data by executing a host application. In step 3520, the host computer initiates a transmission carrying the user data to the UE. The transmission may pass via the base station, in accordance with the teachings of the embodiments described throughout this disclosure. In step 3530 (which may be optional), the UE receives the user data carried in the transmission.

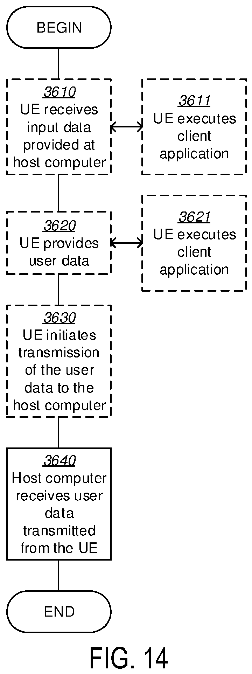

FIG. 14 is a flowchart illustrating a method implemented in a communication system, in accordance with one embodiment. The communication system includes a host computer, a base station and a UE which may be those described with reference to FIGs. 10 and 11. For simplicity of the present disclosure, only drawing references to FIG. 14 will be included in this section. In step 3610 (which may be optional), the UE receives input data provided by the host computer. Additionally or alternatively, in step 3620, the UE provides user data. In substep 3621 (which may be optional) of step 3620, the UE provides the user data by executing a client application. In substep 3611 (which may be optional) of step 3610, the UE executes a client application which provides the user data in reaction to the received input data provided by the host computer. In providing the user data, the executed client application may further consider user input received from the user. Regardless of the specific manner in which the user data was provided, the UE initiates, in substep 3630 (which may be optional), transmission of the user data to the host computer. In step 3640 of the method, the host computer receives the user data transmitted from the UE, in accordance with the teachings of the embodiments described throughout this disclosure.

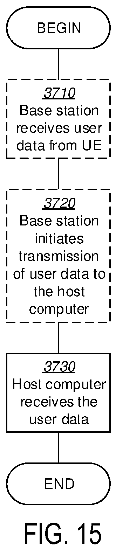

FIG. 15 is a flowchart illustrating a method implemented in a communication system, in accordance with one embodiment. The communication system includes a host computer, a base station and a UE which may be those described with reference to FIGs. 10 and 11. For simplicity of the present disclosure, only drawing references to FIG. 15 will be included in this section. In step 3710 (which may be optional), in accordance with the teachings of the embodiments described throughout this disclosure, the base station receives user data from the UE. In step 3720 (which may be optional), the base station initiates transmission of the received user data to the host computer. In step 3730 (which may be optional), the host computer receives the user data carried in the transmission initiated by the base station.

According to an aspect of the disclosure, there is provided a method implemented in a communication system including a host computer, a base station and a terminal device. The method comprises, at the host computer, receiving user data transmitted to the base station from the terminal device. The terminal device determines a frequency hopping configuration for transmission of one or more PUSCHs in a request message for random access. The terminal device transmits the one or more PUSCHs in the request message based on the frequency hopping configuration. The request message at least comprises a PRACH preamble and the one or more PUSCHs.

In an embodiment of the disclosure, the method may further comprise, at the terminal device, providing the user data to the base station.

In an embodiment of the disclosure, the method may further comprise, at the terminal device, executing a client application, thereby providing the user data to be transmitted. The method may further comprise, at the host computer, executing a host application associated with the client application.

In an embodiment of the disclosure, the method may further comprise, at the terminal device, executing a client application. The method may further comprise, at the terminal device, receiving input data to the client application. The input data may be provided at the host computer by executing a host application associated with the client application. The user data to be transmitted may be provided by the client application in response to the input data.

According to another aspect of the disclosure, there is provided a communication system including a host computer comprising a communication interface configured to receive user data originating from a transmission from a terminal device to a base station. The terminal device comprises a radio interface and processing circuitry. The processing circuitry of the terminal device is configured to determine a frequency hopping configuration for transmission of one or more PUSCHs in a request message for random access. The processing circuitry of the terminal device is further configured to transmit the one or more PUSCHs in the request message based on the frequency hopping configuration. The request message at least comprises a PRACH preamble and the one or more PUSCHs.

In an embodiment of the disclosure, the communication system may further include the terminal device.

In an embodiment of the disclosure, the communication system may further include the base station. The base station may comprise a radio interface configured to communicate with the terminal device and a communication interface configured to forward to the host computer the user data carried by a transmission from the terminal device to the base station.

In an embodiment of the disclosure, the processing circuitry of the host computer may be configured to execute a host application. The processing circuitry of the terminal device may be configured to execute a client application associated with the host application, thereby providing the user data.

In an embodiment of the disclosure, the processing circuitry of the host computer may be configured to execute a host application, thereby providing request data. The processing circuitry of the terminal device may be configured to execute a client application associated with the host application, thereby providing the user data in response to the request data.

According to a yet another aspect of the disclosure, there is provided a method implemented in a communication system including a host computer, a base station and a terminal device. The method comprises, at the host computer, receiving, from the base station, user data originating from a transmission which the base station has received from the terminal device. The base station determines a frequency hopping configuration to be used by a terminal device for transmission of one or more PUSCHs in a request message for random access. The base station receives the one or more PUSCHs in a request message for random access based on the frequency hopping configuration.

In an embodiment of the disclosure, the method may further comprise, at the base station, receiving the user data from the terminal device.

In an embodiment of the disclosure, the method may further comprise, at the base station, initiating a transmission of the received user data to the host computer.

According to yet another aspect of the disclosure, there is provided a communication system including a host computer comprising a communication interface configured to receive user data originating from a transmission from a terminal device to a base station. The base station comprises a radio interface and processing circuitry. The base station's processing circuitry is configured to determine a frequency hopping configuration to be used by a terminal device for transmission of one or more PUSCHs in a request message for random access. The base station's processing circuitry is further configured to receive the one or more PUSCHs in a request message for random access based on the frequency hopping configuration.

In an embodiment of the disclosure, the communication system may further include the base station.

In an embodiment of the disclosure, the communication system may further include the terminal device. The terminal device may be configured to communicate with the base station.

In an embodiment of the disclosure, the processing circuitry of the host computer may be configured to execute a host application. The terminal device may be configured to execute a client application associated with the host application, thereby providing the user data to be received by the host computer.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one skilled in the art, the function of the program modules may be combined or distributed as desired in various embodiments. In addition, the function may be embodied in whole or in part in firmware or hardware equivalents such as integrated circuits, field programmable gate arrays (FPGA), and the like.

References in the present disclosure to "one embodiment", "an embodiment" and so on, indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

It should be understood that, although the terms "first", "second" and so on may be used herein to describe various elements, these elements should not be limited by these terms. These terms are only used to distinguish one element from another. For example, a first element could be termed a second element, and similarly, a second element could be termed a first element, without departing from the scope of the disclosure. As used herein, the term "and/or" includes any and all combinations of one or more of the associated listed terms.

The terminology used herein is for the purpose of describing particular embodiments only and is not intended to limit the present disclosure. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components, but do not preclude the presence or addition of one or more other features, elements, components and/ or combinations thereof. The terms "connect", "connects", "connecting" and/or "connected" used herein cover the direct and/or indirect connection between two elements.

## Claims

1. A method performed by a terminal device, comprising:
determining (502) a frequency hopping configuration for transmission of one or more physical uplink shared channels, PUSCHs, in a request message for random access; and
transmitting (504) the one or more PUSCHs in the request message based on the frequency hopping configuration, the request message at least comprising a physical random access channel, PRACH, preamble and the one or more PUSCHs.

2. The method according to claim 1, wherein the frequency hopping configuration comprises one or more parameters indicating:
enabling and/or disabling of frequency hopping;
a starting physical resource block, PRB, for frequency hopping;
a frequency offset for frequency hopping;
a frequency hopping type which is one of intra-slot hopping, inter-slot hopping, intra-PUSCH occasions, POs, hopping and inter-POs hopping;
a number of slots which the one or more PUSCHs span; or
a redundancy version, RV, for the more than one PUSCHs.

3. The method according to claim 1 or 2, wherein the frequency hopping configuration is determined based on a radio resource control, RRC, signaling.

4. The method according to claim 3, wherein the RRC signaling is a cell-specific RRC signaling or an RRC signaling specific to the terminal device.

5. The method according to claim 3 or 4, wherein the terminal device determines to disable frequency hopping when a frequency offset is not configured in the RRC signaling.

6. The method according to claim 3 or 4, wherein the terminal device determines to disable frequency hopping when a frequency offset is set to zero in the RRC signaling.

7. The method according to claim 2, wherein the one or more parameters in the frequency hopping configuration are determined as predetermined values.

8. The method according to claim 2, wherein the one or more parameters in the frequency hopping configuration are determined based on a PRACH configuration for the PRACH preamble.

9. The method according to claim 8, wherein the PRACH configuration for the PRACH preamble comprises one or more of:
an extended PRACH configuration table from which one or more parameters in the frequency hopping configuration can be retrieved according to a PRACH configuration index;
a number of PRACH occasions;
a starting PRB of the PRACH preamble; and
whether to perform the random access as contention based random access, CBRA, or contention free random access, CFRA.

10. The method according to claim 2, wherein the one or more parameters in the frequency hopping configuration are determined based on one or more of:
whether a cell serving the terminal device uses frequency division duplexing, FDD, or time division duplexing, TDD;
different frequency bands in which the terminal device operates;
whether a regular uplink carrier or a supplementary uplink carrier is to be used for the random access;
whether the random access is to be performed in an initial active uplink bandwidth part, BWP; and
a size of an active BWP.

11. The method according to claim 10, wherein a frequency offset for frequency hopping is determined based on the size of the active BWP.

12. A method performed by a base station, comprising:
determining (602) a frequency hopping configuration to be used by a terminal device for transmission of one or more physical uplink shared channels, PUSCHs, in a request message for random access; and
receiving (604) the one or more PUSCHs in a request message for random access based on the frequency hopping configuration, the request message at least comprising a physical random access channel, PRACH, preamble and the one or more PUSCHs.

13. The method according to claim 12, wherein the frequency hopping configuration comprises one or more parameters indicating:
enabling and/or disabling of frequency hopping;
a starting physical resource block, PRB, for frequency hopping;
a frequency offset for frequency hopping;
a frequency hopping type which is one of intra-slot hopping, inter-slot hopping, intra-PUSCH occasions, POs, hopping and inter-POs hopping;
a number of slots which the one or more PUSCHs span; or
a redundancy version, RV, for the more than one PUSCHs.

14. A terminal device (700) comprising:
at least one processor (710); and
at least one memory (720), the at least one memory (720) containing instructions executable by the at least one processor (710), whereby the terminal device (700) is operative to:
determine a frequency hopping configuration for transmission of one or more physical uplink shared channels, PUSCHs, in a request message for random access; and
transmit the one or more PUSCHs in the request message based on the frequency hopping configuration, the request message at least comprising a physical random access channel, PRACH, preamble and the one or more PUSCHs.

15. A base station (700) comprising:
at least one processor (710); and
at least one memory (720), the at least one memory (720) containing instructions executable by the at least one processor (710), whereby the base station (700) is operative to:
determine a frequency hopping configuration to be used by a terminal device for transmission of one or more physical uplink shared channels, PUSCHs, in a request message for random access; and
receive the one or more PUSCHs in a request message for random access based on the frequency hopping configuration, the request message at least comprising a physical random access channel, PRACH, preamble and the one or more PUSCHs.

## Patentansprüche

1. Verfahren, das von einem Endgerät durchgeführt wird, umfassend:
Bestimmen (502) einer Frequenzsprungkonfiguration für die Übertragung eines oder mehrerer gemeinsamer physikalischer Uplink-Kanäle, PUSCHs, in einer Random-Access-Anforderungsnachricht; und
Übertragen (504) des einen oder der mehreren PUSCHs in der Anforderungsnachricht auf der Grundlage der Frequenzsprungkonfiguration, wobei die Anforderungsnachricht mindestens eine Präambel eines physikalischen Random-Access-Kanals, PRACH, und den einen oder die mehreren PUSCHs umfasst.

2. Verfahren nach Anspruch 1, wobei die Frequenzsprungkonfiguration einen oder mehrere Parameter umfasst, die anzeigen:
Aktivieren und/oder Deaktivieren von Frequenzsprung;
einen Start-Physical-Resource-Block, PRB, für Frequenzsprung;
einen Frequenzversatz für Frequenzsprung;
einen Frequenzsprungtyp, der eines von Intra-Slot-Sprung, Inter-Slot-Sprung, Intra-PUSCH-Occasions-PO-Sprung und Inter-POs-Sprung ist;
eine Anzahl von Slots, die von dem einen oder den mehreren PUSCHs abgedeckt werden; oder
eine Redundanzversion, RV, für den mehr als einen PUSCH.

3. Verfahren nach Anspruch 1 oder 2, wobei die Frequenzsprungkonfiguration auf einer Signalisierung mittels Funkressourcensteuerung, RRC, bestimmt wird.

4. Verfahren nach Anspruch 3, wobei die RRC-Signalisierung eine zellenspezifische RRC-Signalisierung oder eine für das Endgerät spezifische RRC-Signalisierung ist.

5. Verfahren nach Anspruch 3 oder 4, wobei das Endgerät bestimmt, Frequenzsprünge zu deaktivieren, wenn kein Frequenzversatz in der RRC-Signalisierung konfiguriert ist.

6. Verfahren nach Anspruch 3 oder 4, wobei das Endgerät bestimmt, Frequenzsprünge zu deaktivieren, wenn ein Frequenzversatz in der RRC-Signalisierung auf Null festgelegt ist.

7. Verfahren nach Anspruch 2, wobei der eine oder die mehreren Parameter in der Frequenzsprungkonfiguration als vorbestimmte Werte bestimmt werden.

8. Verfahren nach Anspruch 2, wobei der eine oder die mehreren Parameter in der Frequenzsprungkonfiguration auf der Grundlage einer PRACH-Konfiguration für die PRACH-Präambel bestimmt werden.

9. Verfahren nach Anspruch 8, wobei die PRACH-Konfiguration für die PRACH-Präambel eines oder mehreres umfasst aus:
einer erweiterten PRACH-Konfigurationstabelle, aus der ein oder mehrere Parameter in der Frequenzsprungkonfiguration gemäß einem PRACH-Konfigurationsindex abgerufen werden können;
einer Anzahl von PRACH-Occasions;
einem Start-PRb der PRACH-Präambel; und
ob der Random Access als Contention Based Random Access, CBRA, oder als Contention Free Random Access, CFRA, durchgeführt wird.

10. Verfahren nach Anspruch 2, wobei der eine oder die mehreren Parameter in der Frequenzsprungkonfiguration auf der Grundlage von einem oder mehreren bestimmt werden aus:
ob eine das Endgerät bedienende Zelle Frequenzduplexverfahren, FDD, oder Zeitduplexverfahren, TDD, verwendet;
verschiedenen Frequenzbändern, in denen das Endgerät arbeitet;
ob für den Random Access ein regulärer Uplink-Träger oder ein ergänzender Uplink-Träger verwendet werden soll;
ob der Random Access in einer initialen aktiven Uplink-Bandbreitenpartie (BWP) durchgeführt werden soll; und einer Größe der aktiven BWP.

11. Verfahren nach Anspruch 10, wobei ein Frequenzversatz für Frequenzsprünge auf der Grundlage der Größe des aktiven BWP bestimmt wird.

12. Verfahren, das durch eine Basisstation durchgeführt wird, umfassend:
Bestimmen (602) einer Frequenzsprungkonfiguration zur Verwendung durch ein Endgerät für die Übertragung eines oder mehrerer gemeinsamer physikalischer Uplink-Kanäle, PUSCHs, in einer Random-Access-Anforderungsnachricht; und
Empfangen (604) des einen oder der mehreren PUSCHs in einer Random-Access-Anforderungsnachricht auf der Grundlage der Frequenzsprungkonfiguration, wobei die Anforderungsnachricht mindestens eine Präambel eines physikalischen Random-Access-Kanals, PRACH, und den einen oder die mehreren PUSCHs umfasst.

13. Verfahren nach Anspruch 12, wobei die Frequenzsprungkonfiguration einen oder mehrere Parameter umfasst, die anzeigen:
Aktivieren und/oder Deaktivieren von Frequenzsprung;
einen Start-Physical-Resource-Block, PRB, für Frequenzsprung;
einen Frequenzversatz für Frequenzsprung;
einen Frequenzsprungtyp, der eines von Intra-Slot-Sprung, Inter-Slot-Sprung, Intra-PUSCH-Occasions-PO-Sprung und Inter-POs-Sprung ist;
eine Anzahl von Slots, die von dem einen oder den mehreren PUSCHs abgedeckt werden; oder
eine Redundanzversion, RV, für den mehr als einen PUSCH.

14. Endgerät (700), umfassend:
mindestens einen Prozessor (710); und
mindestens einen Speicher (720), wobei der mindestens eine Speicher (720) Anweisungen enthält, die durch den mindestens einen Prozessor (710) ausführbar sind, wodurch das Endgerät (700) dazu betriebsbereit ist:
Bestimmen einer Frequenzsprungkonfiguration für die Übertragung eines oder mehrerer gemeinsamer physikalischer Uplink-Kanäle, PUSCHs, in einer Random-Access-Anforderungsnachricht; und
Übertragen des einen oder der mehreren PUSCHs in der Anforderungsnachricht auf der Grundlage der Frequenzsprungkonfiguration, wobei die Anforderungsnachricht mindestens eine Präambel eines physikalischen Random-Access-Kanals, PRACH, und den einen oder die mehreren PUSCHs umfasst.

15. Basisstation (700), umfassend:
mindestens einen Prozessor (710); und
mindestens einen Speicher (720), wobei der mindestens eine Speicher (720) Anweisungen enthält, die durch den mindestens einen Prozessor (710) ausführbar sind, wodurch die Basisstation (700) dazu betriebsbereit ist:
Bestimmen einer Frequenzsprungkonfiguration zur Verwendung durch ein Endgerät für die Übertragung eines oder mehrerer gemeinsamer physikalischer Uplink-Kanäle, PUSCHs, in einer Random-Access-Anforderungsnachricht; und
Empfangen des einen oder der mehreren PUSCHs in einer Random-Access-Anforderungsnachricht auf der Grundlage der Frequenzsprungkonfiguration, wobei die Anforderungsnachricht mindestens eine Präambel eines physikalischen Random-Access-Kanals, PRACH, und den einen oder die mehreren PUSCHs umfasst.

## Revendications

1. Procédé réalisé par un dispositif terminal, comprenant :
la détermination (502) d'une configuration de saut de fréquence pour la transmission d'un ou plusieurs canaux physiques partagés de liaison montante, PUSCH, dans un message de requête d'accès aléatoire ; et
la transmission (504) des un ou plusieurs PUSCH dans le message de requête sur la base de la configuration de saut de fréquence, le message de requête comprenant au moins un préambule de canal physique d'accès aléatoire, PRACH, et les un ou plusieurs PUSCH.

2. Procédé selon la revendication 1, dans lequel la configuration de saut de fréquence comprend un ou plusieurs paramètres indiquant :
l'activation et/ou la désactivation du saut de fréquence ;
un bloc de ressources physiques, PRB, de départ pour le saut de fréquence ;
un décalage de fréquence pour le saut de fréquence ;
un type de saut de fréquence qui est l'un parmi un saut intra-intervalle de temps, un saut inter-intervalle de temps, un saut intra-occasions de PUSCH, PO, et un saut inter-PO ;
un nombre d'intervalles de temps que les un ou plusieurs PUSCH couvrent ; ou
une version de redondance, RV, pour les plusieurs PUSCH.

3. Procédé selon la revendication 1 ou 2, dans lequel la configuration de saut de fréquence est déterminée sur la base d'une signalisation de commande de ressources radio, RRC.

4. Procédé selon la revendication 3, dans lequel la signalisation RRC est une signalisation RRC spécifique à la cellule ou une signalisation RRC spécifique au dispositif terminal.

5. Procédé selon la revendication 3 ou 4, dans lequel le dispositif terminal détermine de désactiver le saut de fréquence lorsqu'un décalage de fréquence n'est pas configuré dans la signalisation RRC.

6. Procédé selon la revendication 3 ou 4, dans lequel le dispositif terminal détermine de désactiver le saut de fréquence lorsqu'un décalage de fréquence est fixé à zéro dans la signalisation RRC.

7. Procédé selon la revendication 2, dans lequel les un ou plusieurs paramètres dans la configuration de saut de fréquence sont déterminés comme des valeurs prédéterminées.

8. Procédé selon la revendication 2, dans lequel les un ou plusieurs paramètres dans la configuration de saut de fréquence sont déterminés sur la base d'une configuration PRACH pour le préambule PRACH.

9. Procédé selon la revendication 8, dans lequel la configuration PRACH pour le préambule PRACH comprend un ou plusieurs parmi :
une table de configuration PRACH étendue à partir de laquelle un ou plusieurs paramètres dans la configuration de saut de fréquence peuvent être récupérés selon un index de configuration PRACH ;
un nombre d'occasions PRACH ;
un PRB de départ du préambule PRACH ; et
s'il faut réaliser l'accès aléatoire en tant qu'accès aléatoire à base de contention, CBRA, ou accès aléatoire sans contention, CFRA.

10. Procédé selon la revendication 2, dans lequel les un ou plusieurs paramètres dans la configuration de saut de fréquence sont déterminés sur la base d'un ou plusieurs parmi :
si une cellule desservant le dispositif terminal utilise un duplexage par répartition en fréquence, FDD, ou un duplexage par répartition dans le temps, TDD ;
différentes bandes de fréquences dans lesquelles le dispositif terminal fonctionne ;
si une porteuse de liaison montante régulière ou une porteuse de liaison montante supplémentaire doit être utilisée pour l'accès aléatoire ;
si l'accès aléatoire doit être réalisé dans une partie de bande passante, BWP, de liaison montante active initiale ; et une taille d'une BWP active.

11. Procédé selon la revendication 10, dans lequel un décalage de fréquence pour le saut de fréquence est déterminé sur la base de la taille de la BWP active.

12. Procédé réalisé par une station de base, comprenant :
la détermination (602) d'une configuration de saut de fréquence à utiliser par un dispositif terminal pour la transmission d'un ou plusieurs canaux physiques partagés de liaison montante, PUSCH, dans un message de requête d'accès aléatoire ; et
la réception (604) des un ou plusieurs PUSCH dans un message de requête d'accès aléatoire sur la base de la configuration de saut de fréquence, le message de requête comprenant au moins un préambule de canal physique d'accès aléatoire, PRACH, et les un ou plusieurs PUSCH.

13. Procédé selon la revendication 12, dans lequel la configuration de saut de fréquence comprend un ou plusieurs paramètres indiquant :
l'activation et/ou la désactivation du saut de fréquence ;
un bloc de ressources physiques, PRB, de départ pour le saut de fréquence ;
un décalage de fréquence pour le saut de fréquence ;
un type de saut de fréquence qui est l'un parmi un saut intra-intervalle de temps, un saut inter-intervalle de temps, un saut intra-occasions de PUSCH, PO, et un saut inter-PO ;
un nombre d'intervalles de temps que les un ou plusieurs PUSCH couvrent ; ou
une version de redondance, RV, pour les plusieurs PUSCH.

14. Dispositif terminal (700) comprenant :
au moins un processeur (710) ; et
au moins une mémoire (720), l'au moins une mémoire (720) contenant des instructions exécutables par l'au moins un processeur (710), moyennant quoi le dispositif terminal (700) est opérationnel pour :
déterminer une configuration de saut de fréquence pour la transmission d'un ou plusieurs canaux physiques partagés de liaison montante, PUSCH, dans un message de requête d'accès aléatoire ; et
transmettre les un ou plusieurs PUSCH dans le message de requête sur la base de la configuration de saut de fréquence, le message de requête comprenant au moins un préambule de canal physique d'accès aléatoire, PRACH, et les un ou plusieurs PUSCH.

15. Station de base (700) comprenant :
au moins un processeur (710) ; et
au moins une mémoire (720), l'au moins une mémoire (720) contenant des instructions exécutables par l'au moins un processeur (710), moyennant quoi la station de base (700) est opérationnelle pour :
déterminer une configuration de saut de fréquence à utiliser par un dispositif terminal pour la transmission d'un ou plusieurs canaux physiques partagés de liaison montante, PUSCH, dans un message de requête d'accès aléatoire ; et
recevoir les un ou plusieurs PUSCH dans un message de requête d'accès aléatoire sur la base de la configuration de saut de fréquence, le message de requête comprenant au moins un préambule de canal physique d'accès aléatoire, PRACH, et les un ou plusieurs PUSCH.
